# EUROPEAN PATENT SPECIFICATION

(11) **EP 0 956 378 B1**
(45) Date of publication and mention of the grant of the patent: **02.04.2003**
(21) Application number: 97905588.6
(22) Date of filing: 15.01.1997
(51) Int. Cl.: C23C 26/02, B23K 26/00, B23K 26/02

(54) **LASER INDUCED IMPROVEMENT OF SURFACES**
LASERINDUZIERTE VERGÜTETE OBERFLÄCHEN
AMELIORATION DE SURFACES PAR TRAITEMENT LASER

(30) Priority: 15.01.1996 US 587553; 12.07.1996 US 679282
(43) Date of publication of application: 17.11.1999
(73) Proprietor: THE UNIVERSITY OF TENNESSEE RESEARCH CORPORATION, Knoxville, TN 37996-0344 (US)
(72) Inventor: McCAY, Thurman, Dwayne, Winchester, TN 37398 (US); McCAY, Mary, Helen, Winchester, TN 37398 (US); DAHOTRE, Narendra, B., Tullahoma, TN 37388 (US)
(74) Representative: McCall, John Douglas
(86) International application number: US9700753
(87) International publication number: WO97026388

(56) References cited:
- JP-A- 1 083 676
- JP-A- 3 115 531
- JP-A- 3 115 587
- SU-A- 1 557 193
- US-A- 4 015 100
- US-A- 4 157 923
- US-A- 4 212 900
- US-A- 4 720 312
- US-A- 4 750 947
- US-A- 5 247 155
- US-A- 5 446 258

## Description

### Field of the Invention

The present invention relates to the field of treating metallic surfaces subject to oxidation, corrosion and rusting and to the field of producing a part with a smooth surface, as devoid as possible of deviations from smooth, and to metal products with smooth and/or planar surfaces.

### Background of the Invention

Exposed metallic surfaces, such as steel and aluminum, are subject to corrosion, rust, hydrogen embrittlement and wear flash erosion. Typically, these surfaces are protected by painting, cladding, coating or electroplating the surface. These methods, however, require frequent reapplication and are subject to flaking and separation of the protective layer from the substrate surface at the junction of the protective layer and the substrate.

Metal surfaces with smooth surfaces, devoid of topographical irregularities, are an important component of equipment used in various fields, such as in the walls (inner and/or outer) of tanks and vats used for making food products like wine, beer, milk, juices, or fine chemicals. Defects or variations in the smoothness of the walls of the equipment may allow the accumulation of dust, rust, impurities, bacteria or food particles or other undesirable matter.

Presently, the equipment is generally made of stainless steel, which is polished to a smooth surface. Stainless steel is expensive and absolute smoothness of the surface can never be obtained. Therefore, the need exists for a metal substrate which is less expensive than stainless steel to use as a structural component and which can be made at least as smooth or smoother than is obtainable with stainless steel.

US-A-4,157923 discloses a method for increasing the physical properties of a non-allotropic metal article along a beam affected zone.

SU-A-1557193 provides a method for strengthening metal layers and enhancing wear resistance with a laser beam.

US-A-4,015,100 discloses a process for modifying the properties of a surface layer of a metal part using focused radiant energy.

US-A-4,750,957 dislcoses the surface of a base metal alloyed with the aid of a laser or electron beam which locally melts the surface.

US-A-5,247,155 discloses an apparatus and method for monitoring laser materials processing, such as laser welding and laser drilling, wherein an indication of the quality of the processing is obtained by monitoring the plasma generated spaced charge distribution near the melt pool.

US-A-4,212,900 discloses a method and apparatus for alloying the surface of a substrate with a suitable alloying material in which the alloying material is placed on a surface of the substrate and a beam of high intensity energy is directed at the alloying material for a predetermined short period of time.

### Summary of the Invention

It is therefore the object of the present invention to provide metallic surfaces subject to oxidation, corrosion and rusting with a surface alloy layer for protecting such metallic surfaces without the flaking and separation, and the need for frequent reapplication, of prior surface treatments.

This and other objects are achieved in accordance with the present invention with a process by which a metal substrate surface is treated or otherwise protected from corrosion by the formation of an alloy in the surface and subsurface of the substrate. The alloy forms an integral part of the substrate, in contrast to other methods of protecting metal surfaces, such as coating, cladding, painting and electroplating.

According to the present invention there is provided a process for forming an alloy in the surface of a metal substrate comprising applying an alloying precursor material at a controlled rate to the surface and melting the surface and the precursor alloy material by application of a laser beam, forming an alloy of the precursor alloying material and the substrate, measuring one or more parameters indicative of alloying depth or chemistry to provide feedback for controlling the rate of precursor application and the laser beam application; controlling the rate of precursor application and the laser beam application in response to at least one of said feedback measurements, and allowing the alloy to solidity.

Further provided according to the invention is a method of controlling alloy formation in the surface region of a metal workpiece to a predetermined depth, comprising:
a. applying a binder comprising an alloying precursor to the surface of a metal workpiece;
b. irradiating the surface of the workpiece and the alloying precursor with a laser beam emitted from a laser delivery system at a sufficient power and for a sufficient duration to melt the surface of the workpiece and the precursor while moving the workpiece and the precursor relative to the laser beam through the use of a movement system;
c. measuring the temperature of the workpiece surface during irradiation; and
d. controlling laser beam power in response to measured temperature in order to control the depth of alloying in the workpiece.

Also provided in accordance with the invention is a method of controlling alloy formation in the surface region of a metal workpiece to a predetermined depth, comprising:
a. applying a binder comprising an alloying precursor to the surface of a metal workpiece;
b. irradiating the surface of the workpiece and the precursor alloy with a laser beam from a laser delivery system while moving the workpiece and precursor relative to the laser beam through the use of a movement system; and
c. measuring emission spectra data from the laser/surface interface;
d. transmitting emission spectra data to a feedback control system; and
e. using the feedback control system to control laser beam power in response to emission spectra data to control the depth of alloying in the workpiece.

The invention also provides an apparatus for controlling the depth of laser alloying of a metal workpiece that is moving relative to a laser beam, comprising:
a. laser beam delivery system capable of delivering a laser beam pulse at a desired frequency and power density in response to a beam control signal;
b. a movement system capable of causing relative movement between a laser beam emitted from said beam delivery system and a workpiece being irradiated by said beam, said movement occurring at a desired rate, and over desired distance increments, in response to a movement control signal;
c. a precursor application system capable of applying a precursor at a desired rate and thickness to the surface of a moving workpiece;
d. a control system capable of receiving input signals indicative of one or more measured process parameters, processing said signals, transmitting a beam control signal to said beam delivery system, and transmitting a movement control signal to said movement system, so as to control the depth of laser alloying of a workpiece being moved by the movement system relative to a laser beam being delivered by the beam delivery system; and
e. at least one temperature transducer positioned to measure the surface temperature of a workpiece being irradiated by a laser beam delivered by said beam delivery system, said transducer coupled to said control system to transmit an input signal indicative of surface temperature to said control system.

According to the process of the present invention, which shall be referred to as "laser induced surface improvement" (or the LISI process), a desired alloying metal is applied to a metal surface to be treated, and is irradiated by means of a laser beam. The process results in the formation of an alloy in the surface of the metal. The major components of a system for performing the process of the present invention are a laser, a corresponding delivery system, a movement system, a control system (including quality control), and a precursor alloying material, such as a powder in a binder.

In this specification, the term "smooth" or "smoothness" means the lack of "rough" or "roughness". "Smooth" is synonymous with free of deviations from the smooth surface, such as defects, bumps, depressions, waviness, or other irregularities. For example, a perfectly smooth flat surface is one that is perfectly planar, and a perfectly smooth round surface is one that is in perfect round with no surface imperfections out of round. In this specification, the term "planar" is used to indicate a flat surface. The term "smooth" also includes surfaces which are flat and which are planar.

The metal piece of the invention can be of any physical configuration like plates, rectangular, round, square, of multiple sides, concave, convex, etc., including any combination thereof.

The verb "to smooth" means to treat an alloyed surface so as to make it smoother than it was before the treatment. In this specification, the term "to smooth" is also used with expressions like "to remove topographical irregularities", "to remove or reduce deviations from planar", and "to make planar".

It will be appreciated by one skilled in the art that the degree of smoothness or planarity can vary from "perfect" to less than perfect depending on the need of the particular application for which the metal piece is intended.

An unexpected embodiment of the invention is a laser alloyed metal substrate having a surface which is smoother than a metal substrate which has not been laser alloyed.

Another embodiment of the invention is a method for smoothing the surface of a metal piece or part which has been alloyed by means of a laser. According to the method of the invention, a laser alloyed metal substrate is smoothed to obtain a smoother surface of the part than of a corresponding laser alloyed metal part which has not been smoothed, or of a metal surface which has not been laser alloyed.

For further detail regarding the LISI process, apparatus for implementing such a process, and the treated metallic surfaces which are produced, reference is made to the description provided below, in conjunction with the following illustrations.

### Brief Description of the Drawings

Figures 1A, 1B and 1C are schematic, cross-sectional representations of laser induced surface improvement in accordance with the present invention.
Figures 1D and 1E are graphical representations of the cross-sections shown in Figures 1A, 1B and 1C.
Figure 2 is a block diagram of a system for implementing the process of the present invention.
Figure 3 is a cross-sectional view of a typical laser delivery system.

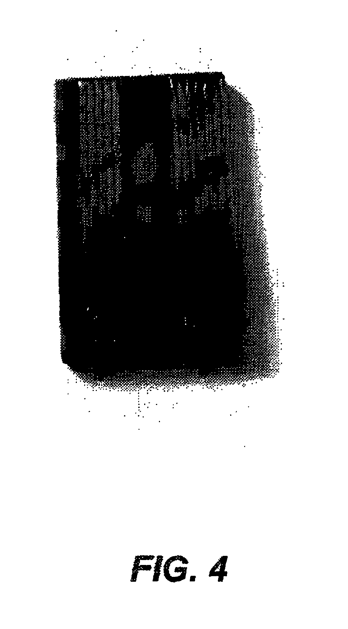

Figure 4 shows a steel piece laser alloyed with chromium in two sets of overlapping tracks. The tracks form a wavy surface where the contact between adjacent tracks has resulted in the formation of parallel ridges.

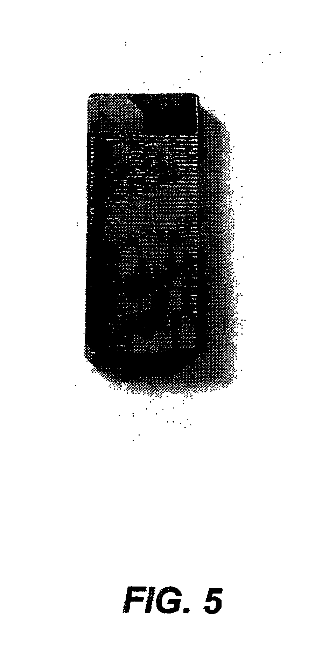

Figure 5 shows a steel piece laser alloyed with chromium in which the laser track spacing is closer than in the sample of Figure 4. Ridges are present at the contact between adjacent tracks.

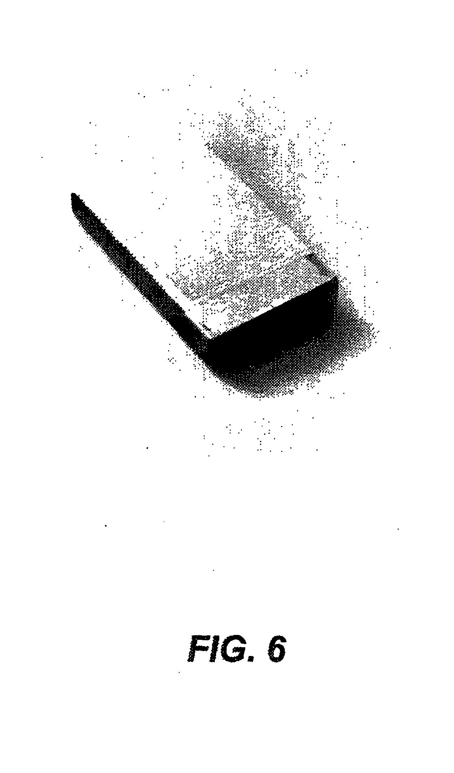

Figure 6 shows a steel piece of Figure 5 which has been smoothed to a planar finish by machining. A portion of the steel piece had been laser alloyed (labelled A) and a portion of the steel piece has not been laser alloyed (labelled B). Both sections A and B were machined in an identical manner. The laser alloyed section is noticeably smoother following machining than is the non-laser alloyed surface. The increased smoothness of section A is detectable visually by touch and/or by profilometry.

### Detailed Description of Preferred Embodiments

The resulting product of the present invention is a surface that has been greatly improved. For example, in the case of a steel substrate, a treatment with chromium according to the LISI process yields a product which essentially constitutes a stainless steel equivalent. In such an embodiment, sufficient amounts of chromium and possibly nickel are added to a thin (less than 500 µ) region of the substrate to make a stainless steel equivalent which is very hard due to the formation of various carbides of chromium.

The resulting stainless steel equivalent is noncorrosive and highly erosion and wear resistant. Therefore, the steel structure can remain in service without the need for periodic replacement, which would require the use of replacement components formed of stainless steel (which is expensive and contains high levels of chromium).

Further, no prior cleaning of the steel substrate is required before applying the process. In fact, a moderate layer of oxide actually can aid in the absorption of the laser beam, thus speeding up the overall process.

The metal to be treated may be any structural metal, including ferrous and non-ferrous materials such as aluminum, nickel, iron or steel, such as 1010 steel or A36 steel. In a preferred embodiment, the substrate metal is plain-carbon steel, also referred to as "mild" steel. The alloying metal, referred alloying with the structural (substrate) metal and may include chromium, aluminum, zinc, copper, nickel, molybdenum, manganese, cobalt, silicon, tungsten, titanium and alloys thereof. Other precursor alloy materials which are suitable for the process of the present invention include precious metals such as gold, silver, platinum and palladium, and alloys thereof. In a preferred embodiment, the precursor alloy material is chromium or an alloy of chromium.

The precursor alloy material may be applied in the form of a powder or as a component of a slurry. In a preferred embodiment, the precursor alloy material is a powder which is mixed with a binder, which may be applied to the metal surface by spraying or painting. The binder may be an organic resin or lacquer or may be a water soluble binder. As described below, the binder is burned off during processing and is, therefore, not present to any significant degree in the final product.

The substrate metal, to which the precursor alloy material has been applied, is heated to a temperature sufficient to cause the substrate metal to melt. As a result, the precursor alloy material mixes and alloys with the molten substrate.

In one embodiment, the precursor alloy material is in the form of a water soluble powder (CrO₃). The powder changes color to pink when mixed with water, and can therefore be seen where it is applied. The powder hardens into a thin film upon application. When the film is heated, as described below, the CrO₃ dissociates and the chromium mixes with the molten metallic substrate. In another embodiment, the precursor alloy material is Cr, which changes color to gray when applied to the substrate, and which can again be seen where applied.

A laser is preferred as a source of heat to melt the substrate (such as steel) because lasers are capable of producing temperatures sufficient to melt desired substrate materials such as steel, iron, nickel and aluminum, and are capable of being carefully controlled to limit the depth of melting of the substrate and the overall heat input into the bulk material. Lasers useful in the process of the present invention may be any of a variety of lasers which are capable of providing a focused or defocused beam which can melt the precursor alloy material and a portion of the surface and subsurface of the substrate material. Suitable laser sources include CO₂ and Nd:YAG lasers. The YAG laser is preferred over the CO₂ laser because the YAG laser may be delivered through fiber optics, which allows for more precise delivery, and because the YAG wavelength is more easily and efficiently absorbed by metals.

The various parameters of the process, including the amount of precursor alloying material and the laser parameters, may be altered as desired to produce an alloy of a particular depth and structure. Also to consider is that some substrates can withstand higher temperatures than other substrates without the formation of cracks and pores. Thus, although a general description of the LISI process is disclosed herein, as well as several specific examples, one skilled in the art will understand that the parameters used may be varied freely based on the substrate material and on the desired result.

The process of the present invention is based on the physical and chemical modification of a surface and subsurface of a metallic material by adding a precursor alloy metal and by applying a high energy source, such as a laser. The precursor alloy material is deposited on the surface of the substrate to be treated. Alternatively, as described below, the precursor alloy material may be provided during and with laser/substrate interaction. The substrate surface and the precursor alloy material are melted by the laser treatment, forming an alloy at the surface and subsurface of the substrate. A shielding gas is preferably provided in the vicinity of the laser/surface interaction region, such as an inert gas (i.e., a gaseous element of the group zero of the periodic system), which may include a reducing gas such as hydrogen. Following such laser surface treatment, the alloyed region is allowed to cool and solidify, preferably through rapid quenching due to the surrounding (major) portions of the substrate material, which remain cool during the treatment process.

The LISI process has several advantages over conventional methods of treatment of metal surfaces. The process of the present invention is a non-contact process, so there is a complete absence of tool wear and mechanical stresses. The process is rapid. For example, areas of 30-60 inch² /min (194-387cm²/ min) can be treated using a single laser. The process can be performed on selective and localized regions, which avoids the processing of unnecessary materials and results in savings of cost and time. The process is well suited for remote processing and automation, which minimizes the exposure of personnel to hazards and increases the accuracy of the process.

In addition, the process results in modification of only the surface and the subsurface regions of the substrate, to a depth of one to five microns to about 2 millimeters. Typical depths of modification are between about 50 and about 500 to about 600 microns. The remainder of the substrate (deep to the modified region) remains unmodified, as do the portions of the metal substrate adjacent to the laser treated areas.

The process results in a surface and subsurface alloyed layer which is not a coating, but which is an inherent part of the substrate material with no distinct interface. Thus, problems of delamination or separation of the alloyed region from the remainder of the substrate are obviated.

Very small amounts, even insignificant amounts, of precursor alloying materials are required for the process of the present invention. The amounts of precursor alloying materials needed for protection of the substrate are much less than the amounts needed for a coating or electroplating of the substrate (often reduced by a factor of 2 to 500). Additionally, the process of the invention is a one-time process. That is, there is no need to inspect and re-coat the substrate as is required with traditional coatings.

Further, by varying the composition of the precursor alloying materials and the laser beam parameters, unconventional and non-traditional alloys can be synthesized within the surface and subsurface region of the substrate. As examples, alloys of Al-W, Al-Cr, Ni-Au, Al-Si-C, Al-Ti-C, or Al-W-C can be synthesized in accordance with the present invention.

The LISI process uses the high power density available from a focused or defocused laser source to melt the alloy material and a portion of the underlying material. Since melting occurs rapidly and only at the surface, the bulk of the material remains cool, thus creating rapid self-quenching and solidification. A wide variety of chemical and microstructural states are retained because of the rapid quench from the liquid phase. These include chemical profiles where the alloyed element is highly concentrated near the atomic surface and decreases in concentration over shallow depths, and uniform profiles where the concentration is the same throughout the entire melted region. The types of microstructures observed range from solid solutions with distinct crystalline phases to metallic glasses.

Laser surface treatment has been used to form in-situ Fe-Cr-C alloys on AISI 1018 steel substrates. Such treatment of plain-carbon steel with chromium has produced a fine grain microstructure of ferrite, lath martensite and complex carbide (M₂₃C₆) precipitation. The structure of martensite was dislocated and the crystal structure of martensite was bcc. The increase in solid solubility and high cooling rate first produced martensite along with high temperature ferrite, followed by the formation of M₂₃C₆ (fcc) carbide precipitate. These carbide precipitates were uniformly distributed in the matrix, which had a high content of chromium. The newly produced alloy in the surface and subsurface region did not show any retained austenite phase. These changes in the plain-carbon steel provided a surface for improved corrosion and wear resistance.

The LISI process may be used on non-corroded, or new metal surfaces to produce a surface and subsurface alloyed region which prevents corrosion, oxidation, hydrogen embrittlement and wear flash erosion of the substrate. In a preferred embodiment, the metal surface to be treated is plain-carbon steel.

The LISI process may also be used to improve existing metal surfaces, such as steel, which have been corroded. The process of the invention eliminates corrosion which is present and inhibits further corrosion. Thus, the process of the present invention rejuvenates or restores oxidized surfaces and inhibits or prevents further corrosion, oxidation, hydrogen embrittlement and wear flash erosion. The process removes rust and makes the surface rust resistant. In addition, the LISI process further improves the qualities of corroded surfaces, resulting in increased smoothness and wear resistance of the rusted surface. When treating oxidized (corroded or rusted) surfaces by the method of the present invention, it is not necessary to remove the oxidized surface, as is required in traditional coating techniques. Rust which is firmly attached to the substrate surface may be left on the surface. However, detached or flaking rust should be removed with a soft brush or other suitable means before treatment.

The LISI process may also be used to alloy noble metals such as gold, silver, platinum or palladium, into a metal substrate such as nickel or an alloy thereof, to form a superalloy with a modified surface that has decreased susceptibility to hydrogen embrittlement. The aerospace industry presently applies a gold coating of several hundred microns to nickel surfaces. The LISI process can protect such surfaces with a large savings in cost because the quantity of gold required is only that which is needed to allow the alloying of a few atomic layers of the surface. Only a few microns, such as 1 or even 2 to 5 microns, in depth of the substrate is alloyed with the gold. Thus, because only a very thin gold coating is needed, the process of the present invention allows for a reduction in the amount of gold needed to protect such surfaces by a factor of 2 to 500. In addition, the LISI process allows for further savings of time and money because the process does not have to be repeated, in contrast to traditional coatings, which must be periodically reapplied.

The LISI process may also be used to produce non-traditional alloys in the surface of a metal substrate. In a preferred embodiment, the metal substrate is aluminum or an aluminum alloy and the alloying metal is tungsten, chromium, cobalt, manganese, magnesium or nickel. By varying the parameters of the LISI process (i.e., the composition of the substrate and precursor alloying material and the parameters associated with the laser), different alloys are produced.

The LISI process may also be used, both with CO₂ lasers and with Nd:YAG lasers, to improve the surface of an aluminum alloy (e.g., 7075) using powders of chromium and of tungsten carbide. The LISI process has also been used to improve the surface of a nickel alloy (marketed under the tradename "Hastelloy", Haynes International, Inc., Kokomo, Indiana) using gold.

A laser alloyed metal substrate can be made smooth by a post-treatment. The degree of smoothness can be varied depending upon the uses to which the metal substrate is intended. For example, the laser alloyed metal surface may be smoothed to just slightly smoother than a corresponding unsmoothed laser alloyed metal. Alternatively, the surface of the laser alloyed metal substrate may be made smooth to a mirror-like quality, with virtually no topographical imperfections or variations from topographical planar perfection. Any degree of smoothness in between these two degrees of smoothness may also be achieved by varying the parameters of the post-treatment, such as the actual manner to which smoothness is obtained and the length of time and force used in smoothing.

The degree of smoothness may be determined by any suitable method. Depending on the accuracy of determination required, smoothness may be determined by feel, by sight, such as by reflected light off the surface of a metal substrate, or by instrumentation, such as a profilometer or optical profilometer, by which the degree of smoothness or planarity can be measured quite precisely.

The smooth or planar laser alloyed metal surface may be a portion of a vat or tank for holding liquids or chemicals, such as those tanks used in the food, chemical, transportation, or other industries. Alternatively, the smooth laser alloyed metal surface may be the internal surface of a wind tunnel, which is likely to provide more accurate measurements of air turbulence or resistance to airflow. Any application for which it is desired to have a smooth metal alloyed substrate surface may be constructed of the smooth laser alloyed metal substrate of the invention. By "surface", it is intended to include the inner surface of a body, which can be achieved by treating the alloy surface and then performing a "closure" of the metal piece so that it be the inside of a metal piece, like of tubular shape.

Smoothing may be by any suitable method for making a metal object smooth or planar or free of topographical irregularities, including mechanical means, such as machining, chemical means, and physical state change, such as melting and resolidifying, or floating on molten metal, such as disclosed in U.S. Patent No. 3,083,551 .
Presently, the reduction of asperities or irregularities of an alloyed surface is quite conventionally performed by physical means such as by machining. Machining may be performed by any suitable means used to machine a metal substrate, including grinding, honing, buffing, boring, milling, sanding, polishing, etc.

In accordance with the method of the invention, a laser alloyed metal substrate will be smoothed on the entire or portion of its surface. In accordance with the invention, the alloyed surface need not be smooth or planar in its entirety. The surface may define valleys (depressions), concave areas and/or on the contrary, convex areas created because of certain needs. However, in accordance with the invention, the sides of such convex and/or concave areas will be smooth. For example, a flat laser alloyed metal substrate may be smoothed on a portion of its surface by a rotary smoothing device in which the axis of rotation is parallel to a surface of the metal substrate, such as a sideways applied drill bit. In this way, a smooth rounded valley bounded on one or both sides by a shoulder cf a smoothed or unsmoothed flat substrate will be obtained.

In accordance with the invention, the planing or smoothing of the surface of a laser alloyed metal substrate will be performed on any laser alloyed surface layer of sufficient thickness so that the smoothing will preferably not affect the integrity of or remove the entire thickness of the alloyed layer, to the point of revealing non-laser alloyed metal substrate below. Laser alloyed substrates may have an alloyed layer between a few microns like about 10 to about 2000 microns or more, commonly from about 50 to 600 or 2000 microns or more in thickness.

The length of time for the smoothing or planing operation will vary from a few seconds to an hour or more depending on the surface, the means used, and the degree of smoothness or shine required.

The smoothing method of the invention may be performed on a laser alloyed metal part before the alloyed metal is used to make a finished product, such as a tank, or in situ, that is as part of the finished product. The method may be performed on one or on more than one side of the part.

The smoothing treatment according to the method of the invention is illustrated in the following non-limiting examples with substrates laser alloyed with chromium. The smoothing treatment is applicable to substrates laser alloyed with metals other than chromium or in addition to chromium, such as those listed above.

In addition to the above discussed uses for the process of the present invention, other utilities will be evident to those skilled in the art from the present disclosure.

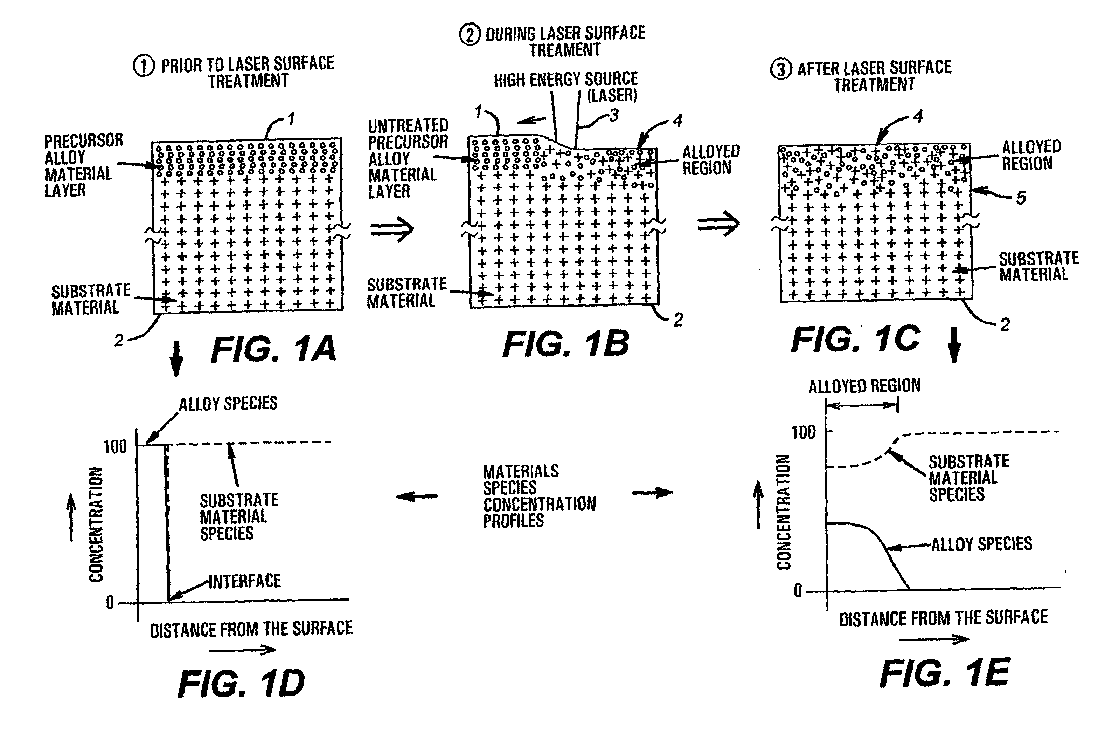

The LISI process is depicted schematically in Figures 1A, 1B and 1C. Before laser surface treatment, as shown in Figure 1A, the precursor alloy material 1 is on the surface of the substrate 2, with a distinct interface between the precursor alloy material and the substrate (see Figure 1D). During laser surface treatment, as shown in Figure 1B, a high energy laser source 3 (e.g., more than 1 kW for most applications) is directed onto the precursor alloy material layer 1 and the substrate 2, resulting in an alloyed region 4 which has been treated and an unalloyed region 5 which has not been treated. Following laser surface treatment, as shown in Figure 1C, a resulting alloy species is found within an alloyed region 4 of several microns (e.g., 1 to 5 microns) at the surface of the substrate 2. In the alloyed region 4, reduced substrate material species are present as compared to what is found in regions of the substrate material beneath the alloyed region (see Figure 1E).

As an example of the foregoing, the LISI process was used to improve the surface of a plain-carbon steel substrate. As previously indicated, such a surface may either be clean or may have a layer of oxide. In the present example, the surface of the substrate was relatively clean, but was not cleaned prior to treatment. Chromium in an organic binder containing methyl ethyl ketone, tetrahydrofuran, toluene and propylene oxide (marketed under the tradename "Microshield", Michigan Chrome & Chemical Co., Hope, Arkansas) was applied in a thickness of 0.5 mm (500 µ) to the steel substrate. A CO₂ laser using a gaussian stationary configuration laser beam with a power of 1.5-2.0 kW and a power density of 50-66 x 10⁵ watts/cm³ was applied to the surface of the substrate at a processing speed of 25 mm/sec to heat the surface of the steel substrate to a temperature sufficient to melt the steel. An argon shielding gas was introduced to the area being treated. The binder was evaporated and removed during processing. A chromium-steel alloyed region with a depth of 0.5 mm to 2.0 mm and having an alloy content of 10 to 45 wt% was produced.

The resulting surface was formed as a surface alloy which is a stainless steel equivalent and which is both noncorrosive and highly erosion and wear resistant. The alloy formed a part of the basic structure of the steel. Consequently, unlike a cladding or a coating, the surface alloy layer will not chip or flake off.

This and other LISI treatments by which the surface of plain-carbon steel has been improved with chromium and other elements are shown in Table 1. The previously described example is shown as "Combination 5" (to the right of Table 1).

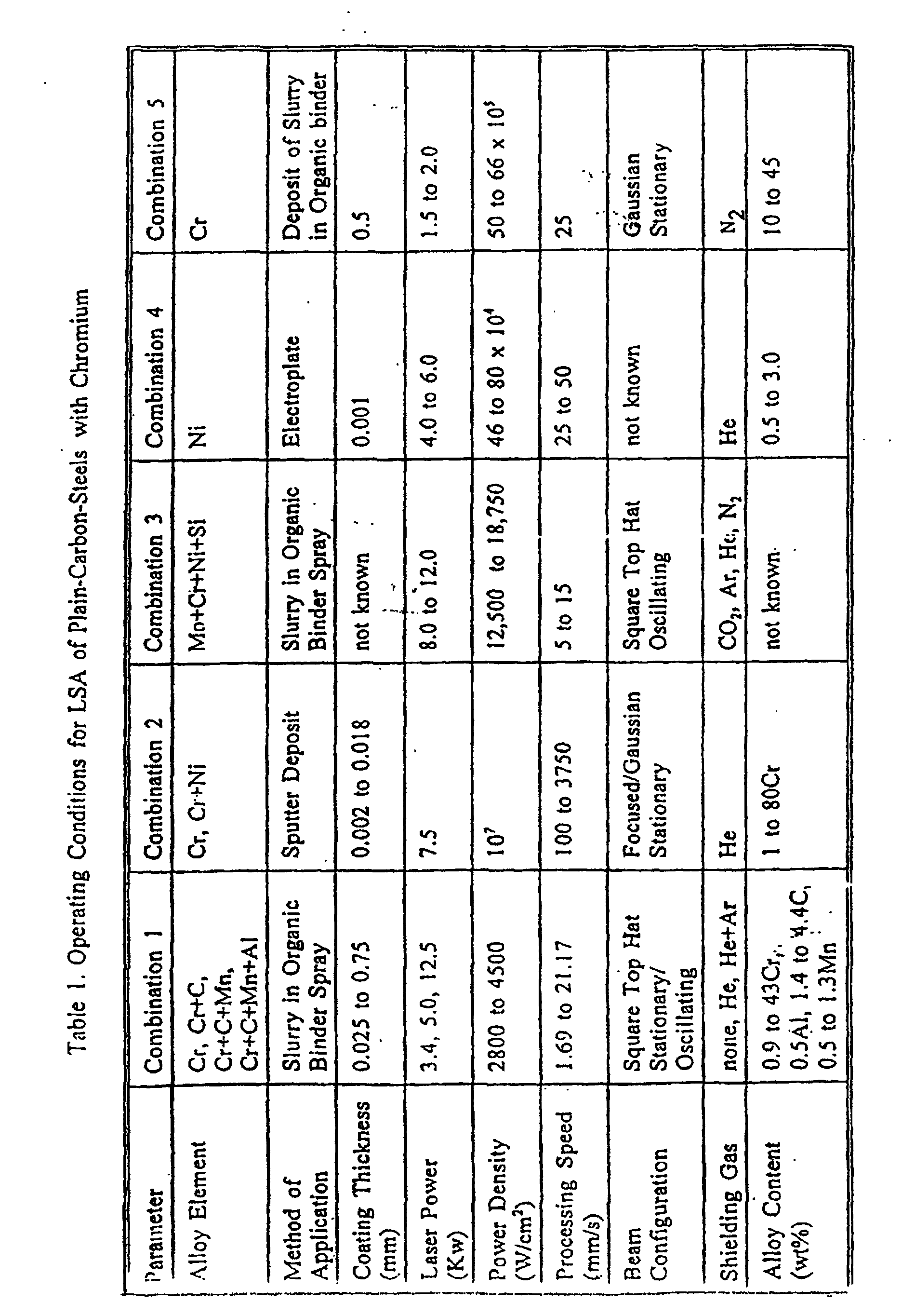

The alloyed regions of the present invention are typically produced to depths of 500 µ (0.5 mm) or less. Typical rates of treatment (i.e., beam movement) are on the order of one inch/second (2.54cm/second). Thus, by the LISI process, regions of about 6 square feet (0.56 square metres) or more can be processed in one hour. To obtain faster rates of treatment, if desired, additional lasers may be used, or plural beams may be derived from a single laser source.

One skilled in the art will understand that the values for power density and processing speed which together provide appropriate cooling rates to produced required phase(s) will be the function of several related process and material parameters such as substrate material (content of carbon and/or other alloying element), method of application, amount of surface alloying material at the laser/substrate zone, beam configuration (square/rectangular (top hat), focused/gaussian, stationary/oscillating), and shielding gas, among others.

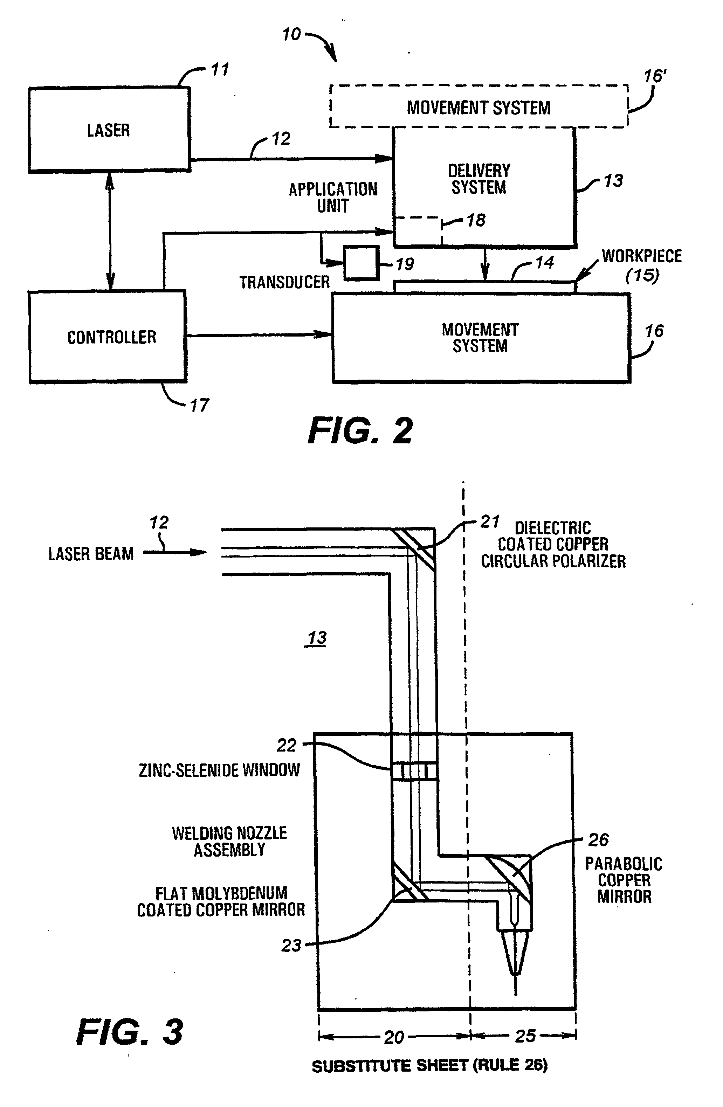

Figure 2 schematically illustrates a system 10 for accomplishing laser induced surface improvement in accordance with the present invention. The system 10 includes a laser 11, which may be a CO₂ laser, a Nd:YAG laser, or equivalent (or an equivalent heat source) for producing a collimated beam (schematically represented at 12) in known fashion. A delivery system 13 is provided for receiving the beam 12, for appropriate delivery to the surface 14 of a workpiece 15. In the case of a CO laser, the delivery system 13 will primarily constitute a series of mirrors for appropriately directing the beam 12 from the laser 11, through the delivery system 13 and onto the surface 14 of the workpiece 15. In the case of a Nd:YAG laser, the delivery system 13 will primarily constitute of a fiber optic system for receiving the beam 12 from the laser 11, and for appropriately directing the beam 12 onto the surface 14 of the workpiece 15. In the latter case, the convenience of a fiber optic delivery system provides significant versatility and flexibility in implementing the system 10 of the present invention.

Appropriate apparatus is provided for causing relative movement between the delivery system 13 and the workpiece 15. In the examples discussed above, this was accomplished with a movement system 16 for receiving the workpiece 15, and for moving the workpiece 15 relative to the delivery system 13. However, for larger scale applications, it is preferable to provide a movement system 16' which is associated with the delivery system 13, for causing movements of the delivery system 13 relative to the workpiece 15. This latter configuration is particularly preferred for applications where movement of the workpiece may be impractical, and is presently considered to be a preferred means for establishing relative movement between the delivery system 13 and the workpiece 15 in larger scale, commercial applications.

A controller 17 communicates with the laser 11, the delivery system 13, and the movement system 16 (or 16'), for purposes of controlling these components, as well as their interaction with one another. For example, the controller 17 communicates with the laser 11 for purposes of controlling the various operating parameters of the laser, such as output power, wave shape, wave length and pulsing of the beam 12. Similarly, the controller 17 communicates with the delivery system 13 for purposes of controlling the delivered beam, primarily its focusing relative to the surface 14 of the workpiece 15. The controller 17 also communicates with the movement system 16 (or 16') for purposes of regulating relative movement between the delivery system 13 and the workpiece 15, such as rate of speed and direction.

As previously indicated, the alloying material can be delivered to the workpiece 15 in a variety of different ways. In the event that the alloying material is sprayed or otherwise delivered to the surface 14 of the workpiece 15 as the surface is lased, an application unit 18 is provided, preferably as part of or in association with the delivery system 13. In such case, the controller 17 communicates with the application unit 18 to regulate the rate of application (e.g., the delivery of a power) of alloying material to the surface 14 of the workpiece 15.

As a practical illustration of laser induced surface improvement in accordance with the present invention, surface alloying has been accomplished with a Model RS3000 (Rofin-Sinar) laser, which is a fast axial flow, radio frequency (27.12 MHz) excited, CO₂ (10.6 µm wavelength) laser capable of operating at average power levels ranging from 0.2 to 3.7 kW (the laser 11). The RS3000 laser was coupled with a Model RS3000 welding head (Rofin-Sinar), including 150 mm, f/6 optics and circular polarization. The resulting beam was operated in the TEM₁₀ mode using a standard pulse configuration (SPC). In this standard pulse configuration, the beam was pulsed at 5 kHz and the average beam power was adjusted by changing the duty cycle of the pulse (i.e., a quasi-continuous wave mode of operation). Pure nitrogen was introduced in the vicinity of the workpiece 15, in a direction coaxial to the laser beam and at a rate of approximately 4 liters/min, to serve as a shielding gas.

In this configuration, a delivery system 13 appropriate to a CO₂ laser was used, and is schematically shown in Figure 3 of the drawings. The illustrated delivery system 13 included a first section 20 having optics for appropriately directing the laser beam. This would include conventional expedients such as the dielectric-coated copper circular polarizer 21, the zinc-selenide window 22, and the flat molybdenum-coated copper mirror 23 shown in the figure. The optics section 20 communicates with a second, focusing section 25, which operates to ultimately direct the laser beam onto the surface 14 of the workpiece 15. To this end, the focusing section 25 includes a parabolic copper mirror 26 which is capable of adjusting the focus of the laser beam, as desired.

The workpiece 15 was mounted on a computer numeric controlled (CNC), 5-axis UNIDEX-16 workstation (AEROTECH), for constant linear translation (the movement system 16). To this end, a steel plate was positioned for receiving a laser beam focused at 25 mm above the surface of the workpiece. Laser treatment was conducted with an average beam power of 2000 watts, providing an energy (power density) of about 100 watts/mm² at the surface of the workpiece. To treat the entire area, the workpiece was translated under the laser beam at a rate of 1500 mm/min and an overlap of 20% (i.e., about 1 mm for a 5 mm width laser track). This rate was maintained throughout the treatment of the workpiece.

In this configuration, AISI 1010 carbon steel plate (250 mm x 250 mm x 6 mm in dimension) was treated to receive a laser surface alloy layer of chromium. A commercially available lacquer (marketed under the tradename "Microshield", TOBLER Division, Hope, Arkansas) was used as an organic binding vehicle for the chromium. A suspension of chromium powder (average 5 µm particle size, 99.6% pure, from CERAC, Milwaukee, Wisconsin) in a solution of 5 vol% of the lacquer in acetone was hand brush painted as a thin, flat and uniform layer on the steel plate. The deposited mixture of chromium and organic binder vehicle was thoroughly dried in air prior to the laser treatment. The steel (substrate) plate was cleaned with methanol and dried in air prior to deposition of the chromium layer. This resulted in a layer of chromium having a thickness of about 50 µm.

The treated AISI 1010 steel plate exhibited fairly uniform surface alloyed regions. Initial observations both in transverse and cross-section under optical as well as scanning electron microscope indicated the creation of a very sound (crack and pore free) layer. The thickness of the alloyed region was about 1.23 mm with an average chromium concentration of 5 wt%. Etching of the alloyed sample in cross-section with a solution of 5 vol% concentrated nitric acid in methanol produced a chemically attacked, dull surface in the substrate material. However, it failed to attack the alloyed region, which remained mirror-like. Such response indicates the transformation of the surface into a corrosion resistant surface.

The surface alloyed region was also tested for physical integrity with the substrate by subjecting the sample to various mechanical loading conditions. The laser alloyed sample was subjected to static cantilever bend testing. The sample was bent through 110° under a normal force of 250 lbs (114kg) without any delamination or cracking under tension. Even though the sample was also subjected to repeated dynamic area (circular), line and point contact loading, there were no indications of any separation from the substrate, or cracking. A sound, mechanically strong and chemically resistant alloyed layer was produced at the AISI 1010 steel surface.

The previously described components are capable of variation in accordance with the present invention, and for purposes of achieving a useful result in conjunction with different applications. For example, and as previously mentioned, different lasers may be used for implementing the laser 11 of Figure 2. One such example is the Nd:YAG laser, which is of interest due to the greater flexibility which it affords in terms of its corresponding delivery system.

As a practical illustration, surface alloying has been accomplished with a JK-701 laser (Lumonics), which is a pulsed Nd:YAG laser (1.06 µm wavelength) with a lasing medium comprised of a single crystal yttrium-aluminum-garnet doped with neodymium. The output beam was coupled to a 15 foot (4.6 metres) fiber optic cable (which scrambles the intensity profile), resulting in a laser beam of near top-hat intensity in profile (TEM₀₀ mode). The beam emitted from the fiber optic cable was focused by a lens (75 mm focal length) to a spot diameter of 400 µm. The JK-701 laser was operated to deliver pulses with a maximum average power of 400 watts and an energy per pulse of 55 Joules. Pulse duration was varied from 0.5 to 20 milliseconds, with pulse rates up to 500 Hz. The exact shape, size and energy of each pulse was obtained by adjusting the duration (width), amplitude (height) and frequency using the control panel.

A chromium coated steel plate was mounted on a computer numeric controlled (CNC) two-axis workstation (TECHNO, a DSG Company, New Hyde Park, NY) having lead screw operated X and Y stages (2 mm/rev), motor (200 full step/rev) and driver (10 microstep/step) providing a maximum of 30 mm traverse in both orthogonal directions, with a maximum of 50 cm/sec traverse speed. The plate was positioned to receive a beam focused at 2.6 mm below the surface. Laser treatment was conducted at 9.5 Joules (pulse power) for 18 milliseconds (pulse duration) at a 20 Hz pulse repetition rate. These settings provided about 20 watts/mm² energy at the surface of the plate. To cover the entire area, the sample was translated under the laser beam at a traverse speed of 360 mm/min and an overlap of 40% (i.e., about 0.4 mm for a 1 mm diameter beam spot) between successive spots and an overlap of 20% (i.e., about 0.2 mm for 1 mm wide laser track) between successive tracks. Such conditions were maintained throughout the treatment. Pure nitrogen was introduced in the vicinity of the workpiece, in a direction coaxial to the laser beam and at a rate of approximately 4 liters/min, to serve as a shielding gas.

AISI 1010 carbon steel plate (250 mm x 250 mm x 6 mm in dimension) was treated to receive a laser surface alloy layer of chromium. A commercially available lacquer (marketed under the tradename "Microshield", TOBLER, Hope, Arkansas) was used as an organic binding vehicle for the chromium. A suspension of chromium powder (average 5 µm particle size, 99.6% pure, from CERAC, Milwaukee, Wisconsin) in a solution of 5 vol% of lacquer in acetone was hand brush painted as a thin, flat and uniform layer on the steel plate. The deposited mixture of chromium and organic binder vehicle was thoroughly dried in air prior to the laser treatment. The steel (substrate) plate was cleaned with methanol and dried in air prior to deposition of the chromium layer. This resulted in a layer of chromium having a thickness of about 50 µm.

The use of Nd:YAG lasers affords various improvements in the overall LISI process. Primarily, this results from the ability of Nd:YAG lasers to communicate with fiber optic delivery systems (and because the wavelengths produced are better absorbed by the workpiece). The size of the laser necessary to effectively treat a surface in accordance with the present invention can be on the order of 2000 pounds (909kg), making it difficult to move the laser relative to the surface to be treated. However, with a fiber optic delivery system, the laser can remain external to the region being treated and the laser beam can be delivered to the surface with fiber optics. The fiber optics and the associated beam manipulator (i.e., the delivery system 13 for focusing and shaping the beam into its desired configuration) are relatively small and are therefore easily handled (e.g., using suitable robotics and associated controllers). Standard length fibers are on the order of 100 to 250 meters, and separate fibers can be joined together to achieve longer extensions. The movement system 16' which can be used with fiber optics will be significantly simpler due to the lighter fiber optics and beam manipulators which are required. As a result, all that is required to achieve a useful result is to move the end of the fiber optics (the beam manipulator) along the surface to be treated, while maintaining a proper distance from the beam manipulator to the surface.

Such movement can be accomplished in conjunction with adjustments of the configuration of the laser beam, from focused, essentially parallel light to unfocused configurations (which is also possible for the CO₂ lasers). For this reason, the distance from the beam manipulator to the surface of the workpiece is not critical, and can vary by several centimeters, further simplifying control of the movement system and the associated laser beam. Although, as previously indicated, CO₂ lasers can provide useful laser induced surface improvement, the use of such lasers is presently considered to be less desirable since the beam delivery systems which they require (mirrors and the like), while feasible, are somewhat more difficult to implement on a practical basis. Nevertheless, such systems can be used to achieve an equally useful result.

Corresponding modifications may be made to the delivery system 13, the movement system 16 (or 16') and the controller 17. For example, a fiber optic delivery system is preferably used in conjunction with the Nd:YAG laser previously described. Essentially, the delivery system 13 will be selected to provide an interface with whatever type of laser 11 (or equivalent heat source) is selected for a particular application.

The movement system 16 (or 16') is similarly capable of variation to suit a particular application. This can include any of a variety of available movement systems such as 2-axis linear motion systems, 1-axis linear and 1-axis rotary systems, combined 1-3 linear and 1-3 rotary stages, fully articulated (multi-degree of freedom) robotic delivery systems and multi-access "crawler" mechanisms. As previously indicated, such movement systems may either be associated with the workpiece 15 (the movement system 16) or with the delivery system 13 (the movement system 16').

Application systems capable of modifying the surface of large structures can take several forms, for purposes of accessing remote areas and for traversing large distances and irregular surfaces. For large regions with no restrictions in access, an articulated robotic arm mounted on a moving base can be used to easily reach floor, wall and ceiling surfaces. Such a system would be programmed to follow the surface geometry and any irregularities present (preferably in conjunction with a height sensor incorporated into the motion control system) to provide consistent processing conditions over the structure. The processing head at the end of the arm could also house other diagnostics for process control, if desired.

For small regions and for regions with limited access, smaller robotic arms can be deployed within the structure, or a miniature delivery head can be deployed for traversing the surface (like a mouse). Tracking systems for such devices are known, and are currently used for pipe welding (and use either a magnet or a track system to process wall and ceiling surfaces). Any track system needed can be physically mounted, using a scaffolding structure or magnets. Miniaturized diagnostics can be incorporated into the delivery head, as with the larger robotic arms.

The relative insensitivity of the LISI process to operating conditions makes it possible to implement hand-held manual operations for appropriate applications (e.g., around air duct valves, flow straighteners, drains, and access ports). This would be used in cases of extreme inaccessibility, and for irregular structures and surfaces. Much as in welding, a human operator would process the surface using sensory feedback and skilled process tracking.

Irrespective of implementation, an important aspect relative to processing speed is the shape of the beam and how the beam is used to process a surface. The above-described examples employed fixed, circular beams which decayed smoothly to zero intensity at their edges. However, other systems may employ beams with rectangular or line-like beam shapes or with very sharp intensity profiles (much like a wide paint brush or roller). These profiles will allow finer control of the process and faster processing speeds.

Such beam profiles can be used in conjunction with a scanning mirror arrangement, as is used in some cosmetic laser surgery applications. Such systems use rotating or vibrating mirrors to very rapidly scan an area of desired shape (and which is generally much larger than the beam size) as the beam is traversed over the processed area. This gives an effect of shaping the beam area, making the beam effectively larger. Suitable control of the scanning frequency provides for correct interaction time.

The controller 17 may include any of a variety of systems and subsystems for controlling the laser 11, the delivery system 13 and the movement systems 16, 16', as needed. For example, the previously described movement system 16 (CNC:AEROTEC UNIDEX-16) employs a 6-axis CNC motion control system coupled with an appropriate laser firing card. Coupled with this motion control system is a PC-based, multi-axis control system (either with a laser firing control card or slaved to the laser control system). Alternatively, an independent processor (multi-axis control system) may be used, which is either mastered to an external laser control system or which is slaved to the external laser control system.

It will be understood that control of the foregoing apparatus, and the process which it implements, is an important part of the laser induced surface improvement of the present invention. As previously indicated, suitable control of the apparatus and its corresponding process have been achieved with a PC-based feedback control system, operating as a master for controlling the laser 11 and the movement system 16 (or 16'). The use of a programmable logic control (PLC) feedback control system is preferred, in combination with an independent, single card feedback control system.

The overall function of the controller 17 is to ensure that the system is functioning appropriately to melt the surface of the substrate to a proper depth, thereby ensuring that the correct alloy is made at the surface. The controller 17 primarily accomplishes this by regulating the power of the laser 11, focusing of the laser beam using the focusing portions 25 of the delivery system 13, and the speed of the movement system 16, 16'. Other parameters associated with the process, such as the application unit 18 (if used) and any associated gas flow rates (i.e., shielding gas), may also be controlled responsive to signals received from the controller 17, if desired.

Further, and referring to Figure 2, a variety of transducers 19 may be placed in the vicinity of the laser delivery system 13 and the workpiece 15 to further interface with the controller 17 and to better control the apparatus and its corresponding process. Suitable transducers 19 for accomplishing such a result include the following.

Temperature measurements are useful in determining the overall efficiency of energy transfer from the laser beam to the workpiece. Such temperature measurements can be used to provide feedback for purposes of modifying the operating parameters of the laser, primarily the power of the laser beam (sample rate), and/or the transport speed of the movement system. Examples of transducers for accomplishing such temperature measurements would include contact temperature measurement of the workpiece and of the environment (surrounding the laser/surface interaction region) in the vicinity of the workpiece, as well as pyrometric temperature measurement of the surface of the workpiece (near the laser/surface interaction region).

Video imaging of the laser/surface interaction region is also useful in providing proper positioning of the laser beam relative to the surface of the workpiece. Images obtained at a high shutter speed (using techniques which are themselves known) are useful in providing a clear indication of the location of the laser/surface interaction region, and such data can be used to provide feedback control of laser beam movement.

Emission spectra emanating from the plasma which is conventionally formed in the laser/surface interaction zone are useful in providing data concerning vapor temperature and species concentration, which have been found to be related to the quality of the overall process. For example, the detection of a low temperature may indicate that the depth of the alloyed surface is undesirably excessive. Emitted spectra related to temperature measurements can be monitored and used to adjust operating parameters of the laser beam (sample rate) and/or the transport speed of the movement system.

Acoustic signals are produced at the surface of the workpiece, and are related to the geometry and physical dynamics of the overall process. As the surface properties (of the molten liquid) change with depth, responsive to changes in the composition, the motion of the resulting melt and the acoustic signals which are produced will differ. Such changes can again be used to provide feedback for controlling the depth of the treated surface by controlling operating parameters of the laser beam (sample rate) and/or the transport speed of the movement system.

Other parameters can be monitored to provide an indication of the overall improvement of the resulting process. For example, laser power can be monitored using an infrared detector to measure fluctuations in laser power, which can provide information related to expected success. Since the surface depth produced may be too small at low laser power levels, limits on laser power can be used as an acceptable criteria for dynamic monitoring of the overall process. Humidity measurements made near the laser/surface interaction region can similarly be used to monitor the environment for acceptable operating conditions.

### EXAMPLE 1

A plain carbon 1010 steel substrate was alloyed by treatment with a YAG laser with a suspension of chromium powder in an organic binder to produce an alloyed surface layer approximately 600 microns thick within the carbon steel substrate. Because of the track nature of the application of the laser apparatus, the thickness of the surface layer varied between 450 to 600 microns. It was determined by visual and tactile inspection that the surface of the laser alloyed metal surface was not smooth. Waves between laser tracks were visible and could be manually felt.

The laser alloyed chromium steel surface was machined with a rotary mill head to remove about 250 microns from the surface. Following rotary milling, machine marks of 5 to 10 microns in depth were noted in the surface. These marks were noted visually and could be determined by a profilometer.

The milled substrate was then placed on a surface grinder and about 50 microns was removed from the front surface, leaving a smooth surface with minimal shine.

The smooth surface was then buffed by a cloth buffing wheel which polished the surface which enhanced the shine and surface finish to a mirror-like quality. The final surface had a thickness between 150 and 300 microns.

Depending on the ultimate use to which a smoothed metal substrate is to be put, one skilled in the art may smooth the metal substrate to a mirror-like quality or may terminate smoothing at any point before a mirror-like quality is obtained.

### EXAMPLE 2

An aluminum substrate is alloyed by treatment with a pulsed YAG laser with a suspension of chromium powder in an organic binder to produce an aluminum/chromium alloyed surface layer approximately 500 microns thick. The aluminum/chromium alloyed layer is post-treated in an identical manner as the steel chromium alloy of Example 1 to obtain a smooth surface of various degrees of smoothness up to that of a mirror-like brightly reflective surface having a thickness of between 100 and 150 microns.

### EXAMPLE 3

A nickel substrate is alloyed by treatment with a CO₂ laser with a suspension of chromium powder in an organic binder to produce a nickel/chromium alloyed surface layer approximately 500 microns thick. The nickel/chromium alloy layer is post-treated in an identical manner as the steel chromium alloy of Example 1 and the aluminum chromium alloy of Example 2 to obtain a mirror shining surface having a thickness of between 150 and 250 microns.

### EXAMPLE 4

A stainless steel substrate sample which has not been laser alloyed is machined in an identical manner as the laser alloyed steel sample of Example 1. It is determined, by means of optical profilometry, that the laser alloyed steel sample is smoother than the non-laser alloyed steel sample.

An aluminum-chromium alloy sample which has not been laser alloyed is machined in an identical manner as the laser alloyed aluminum sample of Example 2. It is determined, by means of optical profilometry, that the laser alloyed aluminum sample is smoother than the non-laser alloyed aluminum sample.

A nickel-chromium alloy sample which has not been laser alloyed is machined in an identical manner as the laser alloyed nickel sample of Example 3. It is determined, by means of optical profilometry, that the laser alloyed nickel sample is smoother than the non-laser alloyed nickel sample.

As will be apparent to those skilled in the art, in light of the foregoing disclosure, many modifications, alterations, and substitutions are possible in the practice of this invention.

## Claims

1. A process for forming an alloy in the surface of a metal substrate comprising applying an alloying precursor material at a controlled rate to the surface and melting the surface and the precursor alloy material by application of a laser beam, forming an alloy of the precursor alloying material and the substrate, measuring one or more parameters indicative of alloying depth or chemistry to provide feedback for controlling the rate of precursor application and the laser beam application; controlling the rate of precursor application and the laser beam application in response to at least one of said feedback measurements, and allowing the alloy to solidify.

2. The process of claim 1 wherein the precursor alloying material is chromium.

3. The process of claim 1 wherein the precursor alloying material is CrO₃.

4. A process according to any one of claims 1 to 3 wherein the step of measuring one or more parameters indicative of alloying depth or chemistry comprises measuring the temperature of the surface.

5. The process of any one of claims 1 to 4 wherein the rate of laser beam application is controlled by changing the pulse cycle of the laser.

6. The process of any one of claims 1 to 5, further comprising the step of applying a reacting gas to the region of the surface.

7. The process of claim 6, wherein said reacting gas is a reducing gas.

8. A process according to any one of claims 1 to 7 wherein the step of measuring one or more parameters indicative of alloying depth or chemistry comprises measuring emission spectra data from the laser /surface interface.

9. The process of any one of claims 1 to 8 comprising providing a feedback control system, a movement system for moving the surface and precursor relative to the laser beam and a laser delivery system wherein said feedback control system comprises a controller coupled to receive inputs from said movement system and said laser delivery system.

10. The process of claim 9, wherein said movement system receives imaging data indicative of the position of the laser beam relative to the substrate

11. The process of claim 10, wherein said controller receives acoustic signals indicative of the physical dynamics of the alloying process.

12. A process according to any one of claims 1 to 11 comprising applying a binder comprising the alloying precursor to the surface.

13. An apparatus for controlling the depth of the laser alloying of a metal workpiece that is moving relative to a laser beam, comprising:
a. a laser beam delivery system capable of delivering a laser beam pulse at a desired frequency and power density in response to a beam control signal;
b. a movement system capable of causing relative movement between a laser beam emitted from said beam delivery system and a workpiece being irradiated by said beam, said movement occurring at a desired rate, and over desired distance increments, in response to a movement control signal;
c. a precursor application system capable of applying a precursor at a desired rate and thickness to the surface of a moving workpiece;
d. a control system capable of receiving input signals indicative of one or more measured process parameters, processing said signals, transmitting a beam control signal to said beam delivery system, regulating in response to said signals the rate of application of said precursor application system and transmitting a movement control signal to said movement system, so as to control the depth of laser alloying of a workpiece being moved by the movement system relative to a laser beam being delivered by the beam delivery system; and
e. at least one temperature transducer positioned to measure the surface temperature of a workpiece being irradiated by a laser beam delivered by said beam delivery system, said transducer coupled to said control system to transmit an input signal indicative of surface temperature to said control system

14. The apparatus of claim 13 wherein said temperature transducer is capable of making a pyrometric temperature measurement.

15. The apparatus of claim 13 or claim 14 further comprising a video imaging device positioned to make a video image of the region of a workpiece being irradiated by a laser beam, said imaging device being coupled to said control system such that video image data can be transmitted to said control system.

16. The apparatus of any one of claims 13 to 15 further comprising an emission spectra measuring device positioned to measure an emission spectra emanating from a plasma formed in the surface of a workpiece irradiated by a laser beam, said measuring device being coupled to said control system such that emission spectra data can be transmitted to said control system.

17. The apparatus of any one of claims 13 to 16, wherein said beam delivery system comprises an infrared detector capable of measuring fluctuations in laser power, and transmitting a signal indicative of laser power to said control system.

18. The apparatus of any one of claims 13 to 17 wherein said precursor application system is capable of applying a precursor at a desired rate in response to an application control signal and wherein said control system is capable of transmitting an application control signal to said application system.

19. The apparatus of any one of claims 13 to 18 further comprising a gas delivery system positioned to deliver a gas to the region of a workpiece being irradiated by a laser beam from said beam delivery system.

20. The apparatus of claim 19 wherein said gas delivery system is capable of delivering gas at a controlled flow rate in response to a gas control signal and wherein said control system is capable of transmitting a gas control signal to said gas delivery system.

21. The apparatus of claim 19 or claim 20, wherein the gas delivered by said gas delivery system is a reducing gas.

22. The apparatus of any one of claims 19 to 21, wherein the gas delivered by said gas delivery system is a shielding gas.

## Patentansprüche

1. Verfahren zur Bildung einer Legierung in der Oberfläche eines Metallsubstrats, das Folgendes umfasst: Aufbringen eines Legierungsvorläufermaterials auf die Oberfläche bei einer gesteuerten Geschwindigkeit und Schmelzen der Oberfläche und des Legierungsvorläufermaterials durch Anwendung eines Laserstrahls, Bildung einer Legierung aus dem Legierungsvorläufermaterial und dem Substrat, Messen eines oder mehrerer Parameter, die die Legierungstiefe oder -chemie anzeigen, um Rückinformationen zur Steuerung der Geschwindigkeit der Vorläuferaufbringung und der Laserstrahlanwendung bereitzustellen; Steuern der Geschwindigkeit der Vorläuferaufbringung und der Laserstrahlanwendung als Reaktion auf mindestens eine der Rückinformationsmessungen und Ermöglichen des Verfestigens der Legierung.

2. Verfahren nach Anspruch 1, wobei das Legierungsvorläufermaterial Chrom ist.

3. Verfahren nach Anspruch 1, wobei das Legierungsvorläufermaterial CrO₃ ist.

4. Verfahren nach einem der Ansprüche 1 bis 3, wobei der Schritt des Messens eines oder mehrerer Parameter, die die Legierungstiefe oder -chemie anzeigen, das Messen der Temperatur der Oberfläche umfasst.

5. Verfahren nach einem der Ansprüche 1 bis 4, wobei die Geschwindigkeit der Laserstrahlanwendung durch Verändern des Impulszyklus des Lasers gesteuert wird.

6. Verfahren nach einem der Ansprüche 1 bis 5, das des Weiteren den Schritt der Anwendung eines Reaktionsgases auf den Bereich der Oberfläche umfasst.

7. Verfahren nach Anspruch 6, wobei das Reaktionsgas ein Reduktionsgas ist.

8. Verfahren nach einem der Ansprüche 1 bis 7, wobei der Schritt des Messens eines oder mehrerer Parameter, die die Legierungstiefe oder -chemie anzeigen, das Messen von Emissionsspektraldaten von der Laser-Oberflächen-Grenzfläche umfasst.

9. Verfahren nach einem der Ansprüche 1 bis 8, das das Bereitstellen eines Rückinformationssteuersystems, eines Bewegungssystems zur Bewegung der Oberfläche und des Vorläufers im Verhältnis zum Laserstrahl und eines Laserzuführungssystems umfasst, wobei das Rückinformationssteuersystem eine Steuerung umfasst, die so angeschlossen ist, dass sie Eingaben von dem Bewegungssystem und dem Laserzuführungssystem empfängt.

10. Verfahren nach Anspruch 9, wobei das Bewegungssystem Bildverarbeitungsdaten empfängt, die die Position des Laserstrahls im Verhältnis zum Substrat anzeigen.

11. Verfahren nach Anspruch 10, wobei die Steuerung akustische Signale empfängt, die die physikalische Dynamik des Legierungsverfahrens anzeigen.

12. Verfahren nach einem der Ansprüche 1 bis 11, das das Aufbringen eines Bindemittels, das den Legierungsvorläufer enthält, auf die Oberfläche umfasst.

13. Vorrichtung zur Steuerung der Tiefe der Laserlegierung eines Metallwerkstücks, das sich im Verhältnis zu einem Laserstrahl bewegt, wobei die Vorrichtung umfasst:
a. ein Laserstrahlzuführungssystem, das in der Lage ist, einen Laserstrahlimpuls mit einer gewünschten Frequenz und Leistungsdichte als Rekation auf ein Strahlsteuersignal zuzuführen;
b. ein Bewegungssystem, das in der Lage ist, eine relative Bewegung zwischen einem Laserstrahl, der von dem Strahlzuführungssystem ausgesendet wird, und einem Werkstück, das von dem Strahl bestrahlt wird, zu verursachen, wobei die Bewegung bei einer gewünschten Geschwindigkeit und über gewünschte Entfernungsinkremente hinweg als Reaktion auf ein Bewegungssteuersignal stattfindet;
c. ein Vorläuferaufbringungssystem, das in der Lage ist, einen Vorläufer mit einer gewünschten Geschwindigkeit und Stärke auf die Oberfläche eines sich bewegenden Werkstücks aufzubringen;
d. ein Steuersystem, das in der Lage ist, Eingabesignale zu empfangen, die einen oder mehrere gemessene Verfahrensparameter anzeigen, die Signale zu verarbeiten, ein Strahlsteuersignal zu dem Strahlzuführungssystem zu senden, als Reaktion auf die Signale die Aufbringungsgeschwindigkeit des Vorläuferaufbringungssystems zu regeln und ein Bewegungssteuersignal zu dem Bewegungssystem zu senden, um die Tiefe der Laserlegierung eines Werkstücks zu steuern, das von dem Bewegungssystem im Verhältnis zu einem Laserstrahl bewegt wird, der von dem Strahlzuführungssystem zugeführt wird; und
e. mindestens einen Temperaturwandler, der so angeordnet ist, dass er die Oberflächentemperatur eines Werkstücks misst, das von einem Laserstrahl bestrahlt wird, der von dem Strahlzuführungssystem zugeführt wird, wobei der Wandler an das Steuersystem angeschlossen ist, um ein Eingabesignal an das Steuersystem zu senden, das die Oberflächentemperatur anzeigt.

14. Vorrichtung nach Anspruch 13, wobei der Temperaturwandler in der Lage ist, eine pyrometrische Temperaturmessung durchzuführen.

15. Vorrichtung nach Anspruch 13 oder 14, die des Weiteren eine Videobildverarbeitungsvorrichtung umfasst, die so angeordnet ist, dass sie ein Videobild des Bereiches eines Werkstücks erstellt, der von einem Laserstrahl bestrahlt wird, wobei die Bildverarbeitungsvorrichtung so an das Steuersystem angeschlossen ist, dass Videobilddaten zu dem Steuersystem gesendet werden können.

16. Vorrichtung nach einem der Ansprüche 13 bis 15, die des Weiteren eine Emissionsspektralmessvorrichtung umfasst, die so angeordnet ist, dass sie ein Emissionsspektrum misst, das von einem Plasma ausgeht, das in der Oberfläche eines Werkstücks gebildet wird, welches von einem Laserstrahl bestrahlt wird, wobei die Messvorrichtung so an das Steuersystem angeschlossen ist, dass Emissionsspektraldaten zu dem Steuersystem gesendet werden können.

17. Vorrichtung nach einem der Ansprüche 13 bis 16, wobei das Strahlzuführungssystem einen Infrarotdetektor umfasst, der in der Lage ist, Schwankungen der Laserleistung zu messen und ein Signal an das Steuersystem zu senden, das die Laserleistung anzeigt.

18. Vorrichtung nach einem der Ansprüche 13 bis 17, wobei das Vorläuferaufbringungssystem in der Lage ist, als Reaktion auf ein Aufbringungssteuersignal einen Vorläufer mit einer gewünschten Geschwindigkeit aufzubringen und wobei das Steuersystem in der Lage ist, ein Aufbringungssteuersignal zu dem Aufbringungssystem zu senden.

19. Vorrichtung nach einem der Ansprüche 13 bis 18, das des Weiteren ein Gaszuführungssystem umfasst, das so angeordnet ist, dass es Gas zu dem Bereich eines Werkstücks zuführt, der mit einem Laserstrahl von dem Strahlzuführungssystem bestrahlt wird.

20. Vorrichtung nach Anspruch 19, wobei das Gaszuführungssystem in der Lage ist, als Reaktion auf ein Gassteuersignal Gas mit einer gesteuerten Strömungsgeschwindigkeit zuzuführen, und wobei das Steuersystem in der Lage ist, ein Gassteuersignal zu dem Gaszuführungssystem zu senden.

21. Vorrichtung nach Anspruch 19 oder 20, wobei das Gas, das von dem Gaszuführungssystem zugeführt wird, ein Reduktionsgas ist.

22. Vorrichtung nach einem der Ansprüche 19 bis 21, wobei das Gas, das von dem Gaszuführungssystem zugeführt wird, ein Schutzgas ist.

## Revendications

1. Procédé pour former un alliage dans la surface d'un substrat métallique comprenant appliquer un matériau précurseur d'alliage à un taux contrôlé à la surface et faire fondre la surface et le matériau précurseur d'alliage par l'application d'un rayon laser, former un alliage du matériau précurseur d'alliage et du substrat, mesurer un ou plusieurs paramètres indicatifs de la profondeur ou chimie de l'alliage afin de fournir une rétroaction pour contrôler le taux d'application de précurseur et d'application de rayon laser; contrôler le taux d'application de précurseur et d'application de rayon laser en réponse à l'une des mesures de rétroaction au moins, et laisser l'alliage se solidifier.

2. Procédé de la revendication 1 dans lequel le matériau précurseur d'alliage est du chrome.

3. Procédé de la revendication 1 dans lequel le matériau précurseur d'alliage est du CrO₃.

4. Procédé selon l'une quelconque des revendications 1 à 3, dans lequel l'étape de mesure d'un ou plusieurs paramètres indicatifs de la profondeur ou chimie de l'alliage, comprend mesurer la température de la surface.

5. Procédé de l'une quelconque des revendications 1 à 4, dans lequel le taux d'application de rayon laser est contrôlé en changeant le cycle d'impulsions du laser.

6. Le procédé de l'une quelconque des revendications 1 à 5, comprenant en outre l'étape consistant à appliquer un gaz de réaction à la région de la surface.

7. Le procédé de la revendication 6, dans lequel ledit gaz de réaction est un gaz réducteur.

8. Procédé selon l'une quelconque des revendications 1 à 7, dans lequel l'étape de mesure d'un ou plusieurs paramètres indicatifs de la profondeur ou chimie de l'alliage, comprend mesurer des données de spectres d'émission de l'interface laser/surface.

9. Le procédé de l'une quelconque des revendications 1 à 8, comprenant fournir un système de commande à rétroaction, un système de déplacement pour déplacer la surface et le précurseur par rapport au rayon laser et un système de décharge laser, dans lequel ledit système de commande à rétroaction comprend un contrôleur couplé pour recevoir des entrées dudit système de déplacement et dudit système de décharge laser.

10. Le procédé de la revendication 9, dans lequel ledit système de déplacement reçoit des données-images indicatives de la position du rayon laser par rapport au substrat.

11. Le procédé de la revendication 10, dans lequel ledit contrôleur reçoit des signaux acoustiques indicatifs de la dynamique physique du procédé d'alliage.

12. Procédé selon l'une quelconque des revendications 1 à 11, comprenant appliquer à la surface un liant comprenant le précurseur d'alliage.

13. Appareil pour contrôler la profondeur de l'alliage au laser d'une pièce métallique à usiner qui se déplace par rapport à un rayon laser, comprenant :
a. un système de décharge de rayon laser capable de fournir une impulsion de rayon laser à une fréquence et à une densité de puissance désirées, en réponse à un signal de commande de rayon;
b. un système de déplacement capable de causer un déplacement relatif entre un rayon laser émis par ledit système de décharge de rayon et une pièce à usiner étant irradiée par ledit rayon, ledit déplacement ayant lieu à un taux désiré, et sur des incréments de distance désirés, en réponse à un signal de commande de déplacement;
c. un système d'application de précurseur capable d'appliquer un précurseur à un taux et à une profondeur désirés, à la surface d'une pièce à usiner qui se déplace;
d. un système de commande capable de recevoir des signaux d'entrée indicatifs d'un ou de plusieurs paramètres de procédé mesurés, de traiter lesdits signaux, de transmettre un signal de commande de rayon audit système de décharge de rayon, de réguler, en réponse auxdits signaux, le taux d'application dudit système d'application de précurseur et de transmettre un signal de commande de déplacement audit système de déplacement, afin de contrôler la profondeur de l'alliage au laser d'une pièce à usiner étant déplacée par le système de déplacement, par rapport à un rayon laser étant fourni par le système de décharge de rayon; et
e. au moins un transducteur de température positionné pour mesurer la température de surface d'une pièce à usiner étant irradiée par un rayon laser fourni par ledit système de décharge de rayon, ledit transducteur couplé audit système de commande pour transmettre un signal d'entrée indicatif de la température de surface audit système de commande.

14. L'appareil de la revendication 13, dans lequel ledit transducteur de température est capable de faire une mesure pyrométrique de température.

15. L'appareil de la revendication 13 ou de la revendication 14, comprenant en outre un dispositif imageur vidéo positionné pour faire une image vidéo de la région d'une pièce à usiner étant irradiée par un rayon laser, ledit dispositif imageur étant couplé audit système de commande de telle sorte que les données-images vidéo peuvent être transmises audit système de commande.

16. L'appareil de l'une quelconque des revendications 13 à 15, comprenant en outre un dispositif de mesure de spectres d'émission pour mesurer un spectre d'émission émanant d'un plasma formé dans la surface d'une pièce à usiner irradiée par un rayon laser, ledit dispositif de mesure étant couplé audit système de commande de telle sorte que des données de spectres d'émission peuvent être transmises audit système de commande.

17. L'appareil de l'une quelconque des revendications 13 à 16, dans lequel ledit système de décharge de rayon comprend un détecteur infrarouge capable de mesurer des fluctuations dans la puissance laser et de transmettre un signal indicatif de puissance laser audit système de commande.

18. L'appareil de l'une quelconque des revendications 13 à 17, dans lequel ledit système d'application de précurseur est capable d'appliquer un précurseur à un taux désiré en réponse à un signal de commande d'application et dans lequel ledit système de commande est capable de transmettre un signal de commande d'application audit système d'application.

19. L'appareil de l'une quelconque des revendications 13 à 18 comprenant en outre un système de décharge de gaz positionné pour fournir un gaz à la région d'une pièce à usiner étant irradiée par un rayon laser dudit système de décharge de rayon.

20. L'appareil de la revendication 19, dans lequel ledit système de décharge de gaz est capable de fournir du gaz à un débit contrôlé, en réponse à un signal de commande de gaz, et dans lequel ledit système de commande est capable de transmettre un signal de commande de gaz audit système de décharge de gaz.

21. L'appareil de la revendication 19 ou de la revendication 20, dans lequel le gaz fourni par ledit système de décharge de gaz est un gaz réducteur.

22. L'appareil de l'une quelconque des revendications 19 à 21, dans lequel le gaz fourni par le système de décharge de gaz est un gaz inerte.
